# FASCICULE DE BREVET EUROPEEN

(11) **EP 2 291 711 B1**
(45) Date de publication et mention de la délivrance du brevet: **25.04.2012**
(21) Numéro de dépôt: 09757693.8
(22) Date de dépôt: 02.06.2009
(51) Int. Cl.: G02F 1/35

(54) **DISPOSITIF OPTIQUE DE CONVERSION DE LONGUEUR D'ONDE, ET SOURCE DE LUMIERE COHERENTE UTILISANT UN TEL DISPOSITIF**
OPTISCHE WELLENLÄNGENUMSETZUNGSANORDNUNG UND KOHÄRENTE LICHTQUELLE DAMIT
OPTICAL WAVELENGTH CONVERSION DEVICE, AND COHERENT LIGHT SOURCE USING SAME

(30) Priorité: 06.06.2008 FR 0803153
(43) Date de publication de la demande: 09.03.2011
(73) Titulaire: Centre National de la Recherche Scientifique, 75016 Paris (FR)
(72) Inventeur: GERBIER, Fabrice, Alain, Pierre, F-75013 Paris (FR); MIMOUN, Emmanuel, Simon, F-75016 Paris (FR); DALIBARD, Jean, F-75005 Paris (FR); ZONDY, Jean-Jacques, F-75010 Paris (FR)
(74) Mandataire: Priori, Enrico
(86) Numéro de dépôt international: PCT/FR2009/000635
(87) Numéro de publication internationale: WO 2009/147317

(56) Documents cités:
- DE-A1-102005 015 497
- US-A- 6 005 878
- US-B1- 6 751 010
- US-B1- 7 035 297
- KOZLOVSKY W J ET AL: "EFFICIENT SECOND HARMONIC GENERATION OF A DIODE-LASER-PUMPED CW ND:YAG LASER USING MONOLITHIC MGO : LINBO3 EXTERNAL RESONANT CAVITIES" IEEE JOURNAL OF QUANTUM ELECTRONICS, IEEE SERVICE CENTER, PISCATAWAY, NJ, USA, vol. 24, no. 6, 1 juin 1988 (1988-06-01), pages 913-919, XP000140150 ISSN: 0018-9197

## Description

L'invention porte sur un dispositif optique de conversion de longueur d'onde, ainsi que sur une source de lumière cohérente utilisant un tel dispositif.

Parmi les différentes sources laser, les sources à état solide et à semiconducteur présentent des caractéristiques très avantageuses en termes d'efficacité énergétique, simplicité, robustesse, encombrement et coût. Par conséquent, elles sont parmi les plus couramment utilisées en milieu industriel.

Cependant, la plupart de ces sources émettent seulement dans le proche infrarouge ou dans la partie rouge du spectre visible. Pour opérer à des longueurs d'ondes inférieures, par exemple dans les domaines jaune, vert ou bleu du spectre visible, voire dans l'ultraviolet, on doit traditionnellement avoir recours à des dispositifs tels que des lasers à ions ou à colorants. Ces derniers, en particulier, présentent de tels inconvénients (toxicité des colorants, instabilité du fonctionnement, difficultés d'utilisation) qu'ils sont désormais en voie de disparition.

Pour pallier aux inconvénients de ces sources laser émettant directement dans le visible ou l'ultraviolet, des systèmes entièrement à l'état solide et basés sur des effets optiques non-linéaires ont été développés. Dans ces systèmes, un faisceau laser infrarouge généré par une source à état solide (dit faisceau de pompe) est doublé en fréquence par interaction avec un cristal non-linéaire (génération de seconde harmonique, ou SHG de l'anglais « second harmonic génération »). En variante, deux faisceaux de pompe distincts sont combinés dans un tel cristal non-linéaire pour générer un troisième faisceau dont la fréquence est égale à la somme des fréquences des faisceaux incidents (génération de fréquence somme, ou SFG de l'anglais « sum-frequency generation »).

Le point faible de ces systèmes de conversion de fréquence (ou, de manière équivalente, de longueur d'onde) est leur efficacité, souvent médiocre.

La technique de conversion de fréquence la plus simple consiste à placer le cristal non-linéaire sur la trajectoire du ou des faisceaux de pompe, se propageant librement. En pratique, cette technique conduit à des efficacités de conversions trop faibles, au moins en régime continu, en raison de l'intensité insuffisante du ou des champs optiques incidents.

Pour améliorer l'efficacité de conversion, il est connu de placer le cristal non-linéaire à l'intérieur d'une cavité optique résonante avec le ou les faisceaux de pompe, à l'intérieur de laquelle l'intensité optique peut atteindre des niveaux très élevés même en régime continu.

Dans un système à génération de seconde harmonique, la cavité optique utilisée peut être constituée par le résonateur même de la source laser infrarouge. Cette possibilité a été exploitée avec succès par la société Cohérent pour sa gamme de lasers « Verdi » (marque de fabrique). Cependant, cette technique est délicate à mettre en oeuvre et à généraliser.

Une alternative, d'utilisation plus flexible, consiste à placer le cristal non-linéaire dans une cavité résonante externe, dite cavité d'exaltation. Un système actif ou passif de stabilisation permet de maintenir la cavité en résonance avec le ou les faisceaux de pompe, de manière à optimiser l'efficacité de conversion qui peut ainsi atteindre, voire dépasser, 50%. Voir par exemple les publications suivantes :
- J. D. Vance, C. -Y. She and H. Moosmüller, Continuous-Wave, « All-Solid-State, Single-Frequency 400-mW Source at 589 nm Based on Doubly Resonant Sum-Frequency Mixing in a Monolithic Lithium Niobate Resonator », App. Opt. 37, pages 4891 - 4896, 1998 (stabilisation passive au moyen de l'effet thermo-optique induit par l'absorption résiduelle intra-cavité, efficacité supérieure à 40%) ; à noter qu'un tel asservissement passif est instable au maximum de la frange de résonance, et limité en bande passante autour du kHz par la diffusion de la chaleur dans le cristal : voir l'article de A. Douillet, J-J Zondy, A. Yelisseyev, S. Lobanov, L. Isaenko, « Stability and frequency tuning of thermally-loaded cw AgGaS2 optical parametric oscillators », J. Opt. Soc. Am. B 16, pp 1481-1498 (1999) ;
- Joshua C. Bienfang, Craig A. Denman, Brent W. Grime, Paul D. Hillman, Gerald T. Moore and John M. Telle, « 20W of continuous-wave sodium D2 resonance radiation from sum-frequency generation with injection-locked lasers », Opt. Lett. 28, pages 2219 - 2221, 2003 (stabilisation active, efficacité supérieure à 55%) ;
ainsi que le document US 7,035,297.

L'article de E. Jurdik et al. « Performance optimization of an external enhancement resonator for optical second-harmonie generation », J. Opt. Soc. Am. B 19, pages 1660 - 1667, 2002 étudie l'optimisation d'une cavité d'exaltation pour génération de deuxième harmonique et fait état d'une efficacité de conversion de 53%.

Dans la plupart des cas, la stabilisation en fréquence de la cavité se fait de manière active, au moyen d'une boucle d'asservissement recevant en entrée un signal d'erreur généré soit à partir d'une fraction du laser de pompe qui est réfléchie par le coupleur d'entrée de la cavité, soit à partir de la faible fraction de la puissance intra-cavité transmise par un des miroirs. La seconde alternative permet de travailler « sur fonds noir » pour éviter de saturer les détecteurs lorsque la cavité n'est pas asservie. Les techniques de stabilisation les plus utilisées sont :
- la technique de Pound - Drever - Hall : voir l'article de Eric D. Black « An introduction to Pound - Drever - Hall laser frequency stabilization », Am. J. Phys. 69, pages 79 - 87, 2001 ;
   la technique "AM-FM" consistant à moduler faiblement la longueur de la cavité par l'intermédiaire d'une céramique piézo-électrique (modulation d'amplitude, ou « AM ») au voisinage d'une résonance puis à démoduler le signal par une détection synchrone afin de générer un signal d'erreur proportionnelle à la dérivée de la frange de résonance ; alternativement la modulation peut être imprimée sur la fréquence laser (modulation de fréquence, ou « FM ») ; et
- la technique de Hânsch - Couillaud : voir T. W. Hänsch and B. Couillaud, « Laser frequency stabilization by polarization spectroscopy on a reflecting référence cavity » Opt. Commun. 35, 441 (1980) .

D'autres techniques ont également été proposées, telles que celle dite de « tilt-locking » ou « désalignement intentionnel » : voir l'article de D. A. Shaddok et al. « Frequency locking a laser to an optical cavity using spatial mode interférence », Opt. Lett. 24 1499 (1999).

Typiquement, on utilise deux mécanismes d'accord en longueur d'onde : l'un rapide, mais avec une dynamique restreinte (« voie rapide ») qui corrige des fluctuations haute fréquence, à spectre presque blanc (vibrations mécaniques, acoustiques, bruit de fréquence et d'amplitude des lasers,...), l'autre plus lent mais avec une dynamique plus étendue (« voie lente ») qui corrige les fluctuations basse et très basse fréquence (dérives long terme, par exemple thermiques,...). Le signal d'erreur dérivé de la cavité soit en réflexion, soit en transmission est amplifié puis intégré (asservissement PI, « Proportionnel-Intégrateur »), éventuellement dérivé (asservissement PID, « Proportionnel-Intégrateur-Dérivateur »), puis utilisé pour piloter les mécanismes d'accord décrits ci-dessus.

Lorsque deux faisceaux de pompe distincts sont utilisés (génération de fréquence somme), la cavité est maintenue accordée au faisceau le plus faible, tandis que la longueur d'onde d'émission du laser de pompe le plus intense est à son tour asservie à la fréquence de résonance de la cavité (voir le document US 7,035,297 précité).

L'article de koglowsky et al., i. of quantum electronics, Vol. 24 p. 913, 1988 décrit un dispositif de génération d'un signal harmonique utilisant un système d'asservissement de la cavité. Les documents US 6 005 878 et DE 10 2005 025 497 décrivent des systèmes d'asservissement de cavités résonantes.

L'invention vise à améliorer l'efficacité d'un système optique de conversion de longueur d'onde du type à cavité externe stabilisée activement.

Les techniques courantes de stabilisation active des cavités optiques ne prennent pas en compte les effets non-linéaires induits par la présence du cristal de conversion de longueur d'onde. Or, les inventeurs se sont rendu compte du fait que la dynamique non-linéaire dans le cristal perturbe sensiblement ces schémas d'asservissement en diminuant la puissance stockée à l'intérieur de la cavité à proximité de la condition de résonance, quand la conversion de longueur d'onde se fait avec l'efficacité la plus élevée. Les inventeurs ont ainsi découvert que l'efficacité de conversion des systèmes connus de l'art antérieur est limitée surtout à cause du fait que cet effet n'est pas pris en compte de manière satisfaisante.

L'invention permet de remédier à cet inconvénient de l'art antérieur et de parvenir à des efficacités de conversion pouvant atteindre 90%.

Plus précisément, un objet de l'invention est un dispositif optique de conversion de longueur d'onde, adapté pour recevoir en entrée au moins un premier faisceau de lumière cohérente, dit premier faisceau de pompe, à une première longueur d'onde, et pour émettre au moins un faisceau de lumière cohérente, dit faisceau de sortie, à une longueur d'onde différente de ladite première longueur d'onde, comprenant : une cavité optique ; un milieu optiquement non-linéaire, disposé à l'intérieur de la cavité optique et susceptible d'interagir avec ledit premier faisceau de pompe pour générer ledit faisceau de sortie ; et un système d'asservissement, pour asservir un mode de résonance de ladite cavité optique à ladite première longueur d'onde ; caractérisé en ce que ledit système d'asservissement est adapté pour recevoir en entrée un premier signal représentatif de l'énergie stockée dans la cavité à ladite première longueur d'onde et un deuxième signal représentatif de la puissance du faisceau de sortie émis par la cavité; et pour générer en sortie un signal d'asservissement de la longueur d'onde de résonance de ladite cavité optique.

En particulier, le système d'asservissement peut être adapté pour générer un signal d'erreur à partir d'une combinaison linéaire dudit premier et dudit deuxième signal.

Le système d'asservissement peut être basé sur un schéma d'asservissement choisi parmi : un schéma Pound - Drever - Hall ; un schéma AM-FM ; un schéma à désalignement intentionnel (« tilt locking ») ; et un schéma Hänsch - Couillaud.

Le dispositif de l'invention peut également être adapté pour recevoir en entrée un deuxième faisceau de lumière cohérente, dit deuxième faisceau de pompe, à une deuxième longueur d'onde, différente de ladite première longueur d'onde ; dans lequel ledit milieu optiquement non-linéaire est susceptible d'interagir avec lesdits premier et deuxième faisceaux de pompe et générer ledit faisceau de sortie par somme ou différence de fréquence.

Un autre objet de l'invention est une source de lumière cohérente comportant : un dispositif optique de conversion de longueur d'onde tel que décrit ci-dessus ; et une source laser pour générer ledit premier faisceau de pompe.

Optionnellement, elle peut comprendre également une deuxième source laser pour générer ledit deuxième faisceau de pompe, typiquement présentant une puissance supérieure à celle dudit premier faisceau de pompe.

Dans ce cas, la source de l'invention peut comporter également un deuxième système d'asservissement pour asservir la longueur d'onde dudit deuxième faisceau de pompe à la longueur d'onde de résonance de ladite cavité. Avantageusement, ledit deuxième système d'asservissement peut être adapté pour asservir la longueur d'onde dudit deuxième faisceau de pompe de manière à maximiser la puissance optique dudit faisceau de sortie.

Selon un mode de réalisation particulier de l'invention, ladite deuxième source laser peut présenter deux mécanismes d'accord en longueur d'onde, un premier mécanisme dit rapide et un second mécanisme dit lent et ayant, par rapport audit premier mécanisme, une bande passante plus étroite mais une dynamique plus étendue ; et dans laquelle ledit deuxième système d'asservissement est adapté pour : lorsque la puissance dudit faisceau de sortie descend au-dessus d'un premier seuil, bloquer et réinitialiser ledit mécanisme lent d'accord en longueur d'onde, et utiliser seulement ledit mécanisme rapide pour l'asservissement ; lorsque la puissance dudit faisceau de sortie dépasse un deuxième seuil, plus élevé dudit premier seuil, réactiver la commande du mécanisme lent.

Optionnellement, la source de l'invention peut comporter également un troisième système d'asservissement pour asservir la longueur d'onde dudit premier faisceau de pompe à une référence externe.

D'autres caractéristiques, détails et avantages de l'invention ressortiront à la lecture de la description faite en référence aux dessins annexés donnés à titre d'exemple et qui représentent, respectivement :
- la figure 1, un schéma de principe d'une source de lumière cohérente selon l'invention ; et
- les figures 2A, 2B et 2C des graphiques de signaux utilisés pour l'asservissement de la cavité résonante.

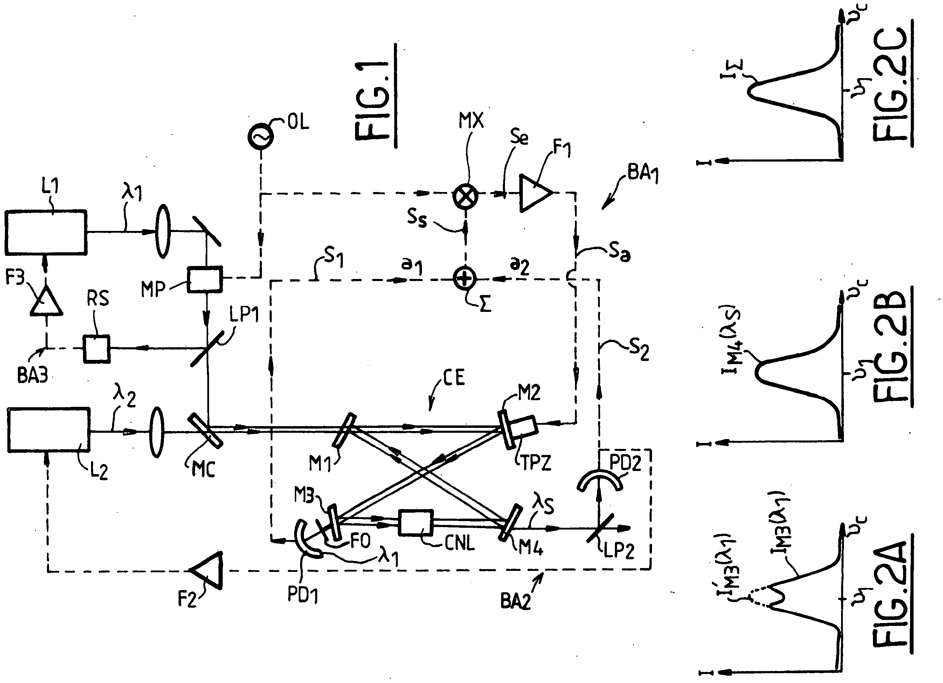

La source de lumière cohérente de la figure 1 se compose d'un système optique et de trois boucles d'asservissement. Sur cette figure, les trajets des faisceaux optiques sont représentés par traits continus et ceux des signaux électroniques par des traits pointillés.

Le système optique comprend deux lasers de pompe; L1 et L2, émettant deux faisceaux de pompe à des longueurs d'onde λ₁ et λ₂ respectivement. Les lasers de pompe L1 et L2 peuvent, par exemple, être deux lasers à Nd :YAG oscillant en régime continu sur un seul mode transverse (TEM₀₀) et longitudinal. La longueur d'onde λ₁ du premier laser de pompe peut être de 1319,2 nm et celle λ₂ du deuxième laser de pompe peut être de 1064,6 nm.

Les deux lasers de pompe sont accordables en longueur d'onde, au moins dans une plage spectrale de l'ordre du nanomètre. Typiquement, chaque laser comporte deux mécanismes d'accord en longueur d'onde : l'un rapide, mais avec une dynamique restreinte (« voie rapide »), l'autre plus lent mais avec une dynamique plus étendue (« voie lente »).

Dans la suite, on considère que le premier laser de pompe L1 présente une puissance d'émission plus faible que celle du deuxième laser L2: c'est donc ce premier laser qui limite la puissance d'émission de la source à la fréquence somme. D'une manière conventionnelle, on définit l'efficacité de conversion non-linéaire comme le rapport entre le flux de photons de sortie de la source et le flux de photons du premier faisceau de pompe.

Les deux faisceaux de pompe sont combinés au moyen d'un miroir dichroïque MC et injectés dans une cavité résonante CE (« cavité d'exaltation ») dans laquelle est placé un cristal non-linéaire CNL. Sur la figure, les trajectoires des deux faisceaux de pompe sont représentées par des lignes parallèles décalées par souci de lisibilité ; en réalité, les deux faisceaux seront superposés pour pouvoir interagir à l'intérieur du cristal.

La cavité CE est une cavité en anneau unidirectionnelle (« bow-tie »), constituée par quatre miroirs M1, M2, M3, M4. Le premier miroir M1 est partiellement transmissif aux longueurs d'onde λ₁ et λ₂ pour servir de coupleur d'entrée ; typiquement sa réflectivité à ces longueurs d'onde est comprise entre 95% et 99%, la valeur exacte étant déterminée en fonction des intensités nominales des faisceaux de pompe (voir l'article précité de E. Jurdik et al.). Les trois autres miroirs M2, M3 et M4 présentent une réflectivité très élevée, généralement supérieure à 99,5%. Le quatrième miroir M4 est transmissif à la longueur d'onde (λₛ) du faisceau de sortie généré dans le cristal non-linéaire, et sert donc de coupleur de sortie. La longueur d'onde de résonance de la cavité CE peut être accordée en modifiant sa longueur au moyen d'un actionneur piézoélectrique TPZ sur lequel est monté le deuxième miroir M2. Il est préférable de disposer de deux actionneurs piézoélectriques, pour commander le même miroir ou deux miroirs distincts, l'un rapide mais ayant une dynamique relativement faible et l'autre plus lent mais avec une dynamique plus étendue.

Le cristal non-linéaire CNL peut être de tout type connu de l'art antérieur et adapté aux longueurs d'onde de fonctionnement de la source. Par exemple, il peut s'agir de KTP (KTiOPO₄) polarisé périodiquement. Une régulation de la température du cristal, par exemple, à l'aide d'un module thermoélectrique, permet d'obtenir l'accord de phase (ou, plus précisément, le quasi-accord de phase dans le cas d'un matériau polarisé périodiquement) à la longueur d'onde voulue.

Le cristal non-linéaire KTP est placé en correspondance du point de focalisation maximale des deux faisceaux de pompe.

Le mélange des deux faisceaux de pompe à l'intérieur du cristal CNL génère un faisceau de sortie dont la fréquence est égale à la somme des fréquences des faisceaux de pompe, et ayant les mêmes propriétés de cohérence spatiale et temporelle, car il s'agit d'un processus cohérent. Dans le cas de l'exemple, la longueur d'onde de sortie est de 589,2 nm et se situe donc dans la partie jaune du spectre visible.

Pour obtenir une conversion de longueur d'onde efficace, il est nécessaire de maximiser l'intensité des faisceaux de pompe dans la cavité CE. Pour ce faire, d'une manière connue en soi, on asservit la cavité à la longueur d'onde d'émission de la source laser la plus faible L1, dite pour cette raison « laser maître ». L'asservissement se fait au moyen d'une première boucle d'asservissement BA1 qui pilote l'actionneur TPZ du miroir M2. Ensuite, le deuxième laser de pompe L2 (laser « esclave ») est asservi à la longueur d'onde de la cavité au moyen d'une deuxième boucle d'asservissement BA2. Cette architecture de commande est connue en soi : voir par exemple le document US 7,035,297 précité.

D'une manière optionnelle, le laser « maître » L1 peut à son tour être asservi à une référence spectroscopique externe RS au moyen d'une troisième boucle d'asservissement BA3, pour stabiliser la longueur d'onde de sortie de la source.

Dans les systèmes de conversion de longueur d'onde connus de l'art antérieur, la première boucle BA1 d'asservissement de la cavité d'exaltation CE au laser maître L1 est conçue de manière à maintenir proche de zéro un signal d'erreur généré à partir de la détection de la fraction du premier faisceau de pompe qui est réfléchie par le coupleur d'entrée de la cavité (miroir M1). En variante, il est possible d'exploiter la fraction de la puissance à la longueur d'onde du premier faisceau de pompe qui est stockée dans la cavité et qui fuit à travers l'un des autres miroirs de ladite cavité. C'est cette deuxième option qui est représentée sur la figure 1 : la lumière qui fuit de la cavité à travers le miroir M3 est filtrée par le filtre dichroïque FO pour en isoler la composante à la longueur d'onde λ₁, qui est détectée par le capteur (photodétecteur) PD1.

Sur la figure 2A, la courbe en trait pointillé l'_{M3}(λ₁) illustre la dépendance de l'intensité du rayonnement à la longueur d'onde λ₁ qui « fuit » de la cavité en fonction de la fréquence de résonance ν_{c} de la cavité CE en l'absence du cristal non-linéaire CNL. Cette courbe a une forme de lorentzienne, et présente un pic très net pour ν_{c}=ν₁ (ν₁ étant la fréquence du premier faisceau de pompe). En effet, lorsque l'accord de fréquence est réalisé entre la cavité et le laser L1, l'énergie stockée dans la cavité à la longueur d'onde λ₁ est maximale, et par conséquent l'intensité de fuite l'est aussi.

L'asservissement de la cavité CE peut donc se faire, en principe, en maximisant la valeur de l'_{M3}(λ₁).

En réalité, il est connu de l'art antérieur que le signal l'_{M3}(λ₁) ne peut pas être utilisé en tant que tel par la boucle d'asservissement, en raison de sa forme symétrique autour du point de maximum. Pour cette raison, des techniques ont été proposées pour générer un signal d'erreur proportionnel à la dérivée de l'_{M3}(λ₁) par rapport à ν_{c}. La méthode la plus répandue est celle de Pound - Drever - Hall. Conformément à cette technique, le premier faisceau de pompe est modulé en phase par une cellule de Pockels MP pilotée par un oscillateur OL à radiofréquence : ensuite, le signal issu du détecteur PD1 est démodulé de manière cohérente en le mélangeant avec le signal à radiofréquence généré par l'oscillateur OL (mélangeur à radiofréquence MX) ; enfin, le signal de sortie du mélangeur MX est filtré (filtre F₁) pour fournir le signal d'erreur requis. La théorie à la base de la méthode de Pound - Drever - Hall est décrite en détail par l'article précité de Eric D. Black.

En réalité, le cristal non-linéaire CNL introduit des pertes dans la cavité CE, dues à la conversion de fréquence. Ces pertes sont d'autant plus importantes que l'efficacité de conversion est élevée, et sont donc maximales lorsque la condition d'accord de la cavité est satisfaite. Toujours sur la figure 2A, la courbe en trait continu I_{M3}(λ₁) illustre la dépendance de l'intensité du rayonnement à la longueur d'onde λ₁ qui « fuit » de la cavité CE en fonction de la fréquence de résonance ν_{c} de cette dernière, en présence d'une conversion de longueur d'onde très efficace. On peut voir que les pertes introduites par la conversion non-linéaire « creusent un trou » dans le graphique de I_{M3}(λ₁). Les inventeurs se sont rendus compte de ce fait et en ont déduit que, dans ces conditions, le signal d'erreur obtenu en appliquant la méthode de Pound - Drever - Hall (ou une autre méthode équivalente) au signal issu du photodétecteur PD1 ne convient plus à l'asservissement de la cavité.

L'invention fournit une solution à ce problème, méconnu, de l'art antérieur.

Conformément à l'invention, le signal d'erreur de la boucle d'asservissement BA1 n'est pas généré uniquement à partir de la fraction du premier faisceau de pompe qui fuit de la cavité, mais également en prenant en compte la puissance optique émise par ladite cavité à la fréquence somme. Pour cela, une lame semi-réfléchissante LP2 est disposée sur le trajet du faisceau de sortie de la source, de manière à diriger une fraction de ce faisceau sur un deuxième photodétecteur PD2.

Sur la figure 2B, la courbe I_{M4}(λₛ) illustre la dépendance de la puissance émise à la longueur d'onde λₛ de la fréquence de résonance ν_{c} de la cavité CE. Cette courbe présente un pic très net centré sur la condition d'accord ν_{c}=ν₁. L'idée à la base de l'invention est d'utiliser le pic de la courbe I_{M4}(λₛ) pour « combler » le trou creusé par la conversion non-linéaire dans le pic de la courbe I_{M3}(λ₁). Sur la figure 2C, la courbe I_{Σ} représente le signal obtenu en additionnant (après les avoir pondéré avec des coefficients appropriés) les signaux I_{M4}(λₛ) et I_{M3}(λ₁).

Concrètement, dans la source de l'invention le signal s₁. généré par le premier photodétecteur PD1, et le signal s₂, généré par le deuxième photodétecteur PD2, sont pondérés par des coefficients a₁, a₂, puis additionnés dans un noeud de somme Σ. Le signal somme sₛ issu de ce noeud Σ est ensuite fourni en entrée au mélangeur MX pour être démodulé de manière cohérente et filtré par un filtre passe-bas (non représenté). Le signal d'erreur sₑ ainsi obtenu est fourni en entrée au filtre de boucle F₁ pour générer le signal d'asservissement sₐ qui pilote l'actionneur piézoélectrique TPZ.

Il est intéressant de noter que la technique de Pound - Drever - Hall peut s'appliquer au signal sₛ parce que, la génération de fréquence somme étant un phénomène cohérent, la modulation de phase du faisceau de pompe se répercute dans le faisceau somme λ₂.

Le fonctionnement de la première boucle d'asservissement a été décrite en référence à la technique de Pound - Drever - Hall. Cependant, d'autres techniques d'asservissement connues de l'art antérieur (et notamment celle de Hänsch - Couillaud) peuvent également être utilisées. Dans tous les cas, le principe est de générer le signal d'erreur à partir d'une combinaison linéaire d'un premier signal représentatif de l'énergie stockée dans la cavité à la longueur d'onde du premier faisceau de pompe et d'un deuxième signal représentatif de la puissance optique générée dans la cavité à la fréquence somme.

Si une technique de type Pound - Drever - Hall est utilisée, il est généralement avantageux d'utiliser une fréquence de modulation de phase ν_{LO} relativement faible (de l'ordre de 1 MHz), de telle manière que les bandes latérales introduites dans le spectre du premier laser de pompe soient comprises dans la bande de résonance de la cavité (qui a toujours une largeur finie) lorsque cette dernière est accordée. Il ne s'agit cependant pas d'une condition essentielle.

La deuxième boucle d'asservissement BA2 du laser « esclave » L2 à la cavité CE peut être d'un type connu de l'art antérieur, et en particulier se baser à son tour sur une technique de type Pound - Drever - Hall (avec une fréquence de modulation distincte de celle utilisée par la première boucle d'asservissement). Pour ne pas surcharger la figure, cependant, la celle de Pockels, l'oscillateur à radiofréquence et le mélangeur / démodulateur utilisés par cette deuxième boucle ne sont pas représentés. La figure ne représente donc que l'acquisition du signal s₂ du deuxième photodétecteur PD2 et son filtrage par le filtre de boucle F2 pour générer un signal de commande qui pilote la deuxième source de pompe L2 de manière à maximiser l'efficacité de la conversion non-linéaire.

Les inventeurs se sont cependant rendus compte du fait qu'une conversion de longueur d'onde très efficace engendre également une difficulté dans le fonctionnement de cette deuxième boucle d'asservissement.

En effet, la largeur de résonance de la cavité dépend de ses pertes. Or, les pertes introduites par la conversion de longueur d'onde sont, proportionnellement, beaucoup plus importantes pour le laser maître (moins intense) que pour le laser esclave. Il s'ensuit que la deuxième boucle d'asservissement est plus « fragile » que la première boucle, qu'elle est pourtant censée suivre. Il existe donc un risque de saturation du signal d'asservissement du laser esclave L2 si, suite à une perturbation transitoire (vibration, instabilité d'une alimentation électrique...), un écart trop important de la condition de résonance se produit.

Pour pallier cet inconvénient, l'invention propose d'exploiter la présence de deux mécanismes d'accord en longueur d'onde du laser L2, un premier mécanisme, relativement rapide mais ayant une dynamique restreinte, et un deuxième mécanisme, plus lent mais ayant une dynamique plus ample.

Normalement, l'asservissement se fait en agissant sur les deux mécanismes (« rapide » et « lent ») à la fois. Cependant, lorsque la puissance de sortie à la fréquence somme descend au-dessous d'un premier seuil, la boucle bloque et réinitialise ledit mécanisme lent, au moyen d'un échantillonneur-bloqueur, pour éviter une saturation du signal de pilotage. Si la boucle est de type PID, elle est ouverte et l'intégrateur qu'elle comporte est remis à zéro en le court-circuitant. Par contre, le mécanisme d'asservissement rapide continue d'être commandé, de préférence de manière uniquement proportionnelle. Lorsque la puissance du faisceau de sortie augmente à nouveau jusqu'à passer un deuxième seuil (supérieur audit premier seuil), le mécanisme d'asservissement lent du laser L2 est réactivé.

La troisième boucle d'asservissement BA3, optionnelle, qui stabilise la longueur d'onde d'émission du laser maître L1 n'appelle pas de commentaires particuliers. Elle a été représentée de manière simplifiée (référence spectroscopique RS, lame semi-réfléchissante LP1 et filtre de boucle F3) pour ne pas surcharger la figure 1.

L'invention a été décrite en référence à un exemple particulier, mais des nombreuses variantes sont possibles.

Ces variantes peuvent concerner en particulier :
- le type des lasers de pompe, qui peuvent notamment être à état solide ou à semiconducteur ;
- les longueurs d'onde de pompe et d'émission de la source ;
- la technique d'asservissement qui sert de base à la réalisation de la première boucle : toute technique connue de l'art antérieur (Hänsch - Couillaud, désalignement intentionnel) peut convenir à la mise en oeuvre de l'invention ;
- le milieu non-linéaire utilisé pour la conversion de longueur d'onde.

En outre, bien que seul le cas d'une somme de fréquence non-dégénérée ait été considéré, l'invention peut exploiter également d'autres effets non-linéaires de conversion de fréquence, tels que la génération de deuxième harmonique (voire d'harmoniques d'ordre supérieur), auquel cas un seul laser de pompe est utilisé, la génération de fréquence différence ou l'amplification paramétrique.

## Revendications

1. Dispositif optique de conversion de longueur d'onde, adapté pour recevoir en entrée au moins un premier faisceau de lumière cohérente, dit premier faisceau de pompe, à une première longueur d'onde (λ₁), et pour émettre au moins un faisceau de lumière cohérente, dit faisceau de sortie, à une longueur d'onde (λₛ) différente de ladite première longueur d'onde, comprenant :
- une cavité optique (CE) ;
- un milieu optiquement non-linéaire (CNL), disposé à l'intérieur de la cavité optique et susceptible d'interagir avec ledit premier faisceau de pompe pour générer ledit faisceau de sortie ; et
- un système d'asservissement (BA1), pour asservir un mode de résonance de ladite cavité optique à ladite première longueur d'onde ;
**caractérisé en ce que** ledit système d'asservissement est adapté pour recevoir en entrée un premier signal (s₁) représentatif de l'énergie stockée dans la cavité à ladite première longueur d'onde et un deuxième signal (s₂) représentatif de la puissance du faisceau de sortie émis par la cavité; et pour générer en sortie un signal d'asservissement (sₐ) de la longueur d'onde de résonance de ladite cavité optique.

2. Dispositif optique selon la revendication 1, dans lequel le système d'asservissement est adapté pour générer un signal d'erreur (sₑ) à partir d'une combinaison linéaire dudit premier et dudit deuxième signal.

3. Dispositif optique selon l'une des revendications précédentes, dans lequel le système d'asservissement (BA1) est basé sur un schéma d'asservissement choisi parmi :
- un schéma Pound - Drever- Hall ;
- un schéma AM-FM ;
- un schéma à désalignement intentionnel (« tilt locking ») ; et
- un schéma Hänsch - Couillaud.

4. Dispositif optique selon l'une des revendications précédentes, également adapté pour recevoir en entrée un deuxième faisceau de lumière cohérente, dit deuxième faisceau de pompe, à une deuxième longueur d'onde (λ₂), différente de ladite première longueur d'onde ; dans lequel ledit milieu optiquement non-linéaire est susceptible d'interagir avec lesdits premier et deuxième faisceaux de pompe et générer ledit faisceau de sortie par somme ou différence de fréquence.

5. Source de lumière cohérente comportant :
un dispositif optique de conversion de longueur d'onde selon l'une des revendications précédentes ; et
une source laser (L1) pour générer ledit premier faisceau de pompe.

6. Source de lumière cohérente comportant :
un dispositif optique de conversion de longueur d'onde selon la revendication 4 ;
une première source laser (L1) pour générer ledit premier faisceau de pompe ; et
une deuxième source laser (L2) pour générer ledit deuxième faisceau de pompe.

7. Source de lumière cohérente selon la revendication 6, dans laquelle ledit deuxième faisceau de pompe présente une puissance supérieure à celle dudit premier faisceau de pompe.

8. Source de lumière cohérente selon l'une des revendications 6 ou 7, comportant également un deuxième système d'asservissement (BA2) pour asservir la longueur d'onde dudit deuxième faisceau de pompe à la longueur d'onde de résonance de ladite cavité.

9. Source de lumière cohérente selon la revendication 8, dans laquelle ledit deuxième système d'asservissement est adapté pour asservir la longueur d'onde dudit deuxième faisceau de pompe de manière à maximiser la puissance optique dudit faisceau de sortie.

10. Source de lumière cohérente selon l'une des revendications 6 à 9, dans laquelle ladite deuxième source laser présente deux mécanismes d'accord en longueur d'onde, un premier mécanisme dit rapide et un second mécanisme dit lent et ayant, par rapport audit premier mécanisme, une bande passante plus étroite mais une dynamique plus étendue ; et dans laquelle ledit deuxième système d'asservissement est adapté pour :
- lorsque la puissance dudit faisceau de sortie descend au-dessus d'un premier seuil, bloquer et réinitialiser ledit mécanisme lent d'accord en longueur d'onde, et utiliser seulement ledit mécanisme rapide pour l'asservissement ;
- lorsque la puissance dudit faisceau de sortie dépasse un deuxième seuil, plus élevé que le premier seuil, réactiver la commande du mécanisme lent.

11. Source de lumière cohérente selon l'une des revendications 5 à 10, comportant également un troisième système d'asservissement (BA3) pour asservir la longueur d'onde dudit premier faisceau de pompe à une référence externe.

## Claims

1. An optical device for wavelength conversion, the device being adapted to receive as input at least a first coherent light beam, referred to as a first pump beam, at a first wavelength (λ₁), and to emit at least one coherent light beam, referred to as an outlet beam, at a wavelength (λₛ) that is different from said first wavelength, the device comprising:
• an optical cavity (CE);
• an optically non-linear medium (CNL) located inside the optical cavity and suitable for interacting with said first pump beam to generate said outlet beam; and
• a servo-control system (BA1) for servo-controlling a resonance mode of said optical cavity at said first wavelength;
the device being **characterized in that** said servo-control system is adapted to receive as input a first signal (s₁) representative of the energy stored in the cavity at said first wavelength, and a second signal (s₂) representative of the power of the outlet beam emitted by the cavity; and to output a servo-control signal (sₐ) for servo-controlling the resonant wavelength of said optical cavity.

2. An optical device according to claim 1, wherein the servo-control system is adapted to generate an error signal (sₑ) from a linear combination of said first and second signals.

3. An optical device according to either preceding claim, wherein the servo-control system (BA1) is based on a servo-control scheme based on:
• a Pound - Drever - Hall scheme;
• an AM-FM scheme;
• a "tilt locking" or intentional misalignment scheme; and
• a Hänsch - Couillaud scheme.

4. An optical device according to any preceding claim, also adapted to receive as input a second coherent light beam, referred to as a second pump beam, at a second wavelength (λ₂) different from said first wavelength; wherein said optically non-linear medium is capable of interacting with said first and second pump beams to generate said outlet beam at the sum or difference frequency.

5. A coherent light source comprising:
• an optical wavelength conversion device according to any preceding claim; and
• a laser source (L1) for generating said first pump beam.

6. A coherent light source comprising:
• an optical wavelength conversion device according to claim 4;
• a first laser source (L1) for generating said first pump beam; and
• a second laser source (L2) for generating said second pump beam.

7. A coherent light source according to claim 6, wherein said second pump beam presents power greater than that of said first pump beam.

8. A coherent light source according to claim 6 or claim 7, also including a second servo-control system (BA2) for servo-controlling the wavelength of said second pump beam at the resonant wavelength of said cavity.

9. A coherent light source according to claim 8, wherein said second servo-control system is adapted to servo-control the wavelength of said second pump beam in such a manner as to maximize the light power of said outlet beam.

10. A coherent light source according to any one of claims 6 to 9, wherein said second laser source presents two wavelength-tuning mechanisms, a "fast" first mechanism and a "slow" second mechanism that presents, relative to said first mechanism, a passband that is narrower and a dynamic range that is broader; and wherein said second servo-control system is adapted:
• when the power of said outlet beam drops below a first threshold, to block and reinitialize said slow wavelength tuning mechanism, and to use only said fast mechanism for servo-control; and
• when the power of said outlet beam exceeds a second threshold, higher than the first threshold, to reactivate control by the slow mechanism.

11. A coherent light source according to any one of claims 5 to 10, also including a third servo-control system (BA3) for servo-controlling the wavelength of said first pump beam to an external reference.

## Patentansprüche

1. Optische Vorrichtung zur Wellenlängenkonversion, welche dazu ausgestaltet ist am Eingang wenigstens einen ersten kohärenten Lichtstrahl, genannt erster Pumpstrahl, mit einer ersten Wellenlänge (λ₁) aufzunehmen und wenigstens einen kohärenten Lichtstrahl, genannt Ausgangsstrahl, mit einer von der ersten Wellenlänge unterschiedlichen Wellenlänge (λₛ) abzugeben, umfassend:
- eine optische Kavität (CE);
- ein optisch nicht lineares Medium (CNL), welches im Inneren der optischen Kavität angeordnet ist und dazu geeignet ist, mit dem ersten Pumpstrahl zu wechselwirken, um den Ausgangsstrahl zu erzeugen; und
- ein Regelsystem (BA1), um einen Resonanzmodus der optischen Kavität bei der ersten Wellenlänge zu regeln;
**dadurch gekennzeichnet, dass** das Regelsystem dazu ausgestaltet ist, am Eingang ein erstes Signal (s₁), welches die bei der ersten Wellenlänge in der Kavität gespeicherte Energie repräsentiert, und ein zweites Signal (s₂), welches die Leistung des von der Kavität abgegebenen Ausgangsstrahls repräsentiert, aufzunehmen und am Ausgang ein Steuersignal (sₐ) für die Resonanzwellenlänge der optischen Kavität zu erzeugen.

2. Optische Vorrichtung nach Anspruch 1, wobei das Regelsystem dazu ausgestaltet ist, ausgehend von einer Linearkombination des ersten und des zweiten Signals ein Fehlersignal (sₑ) zu erzeugen.

3. Optische Vorrichtung nach einem der vorhergehenden Ansprüche, wobei das Regelsystem (BA1) auf einem Regelschema basiert, welches ausgewählt ist aus:
- ein Pound-Drever-Hall-Schema;
- ein AM-FM-Schema;
- ein Schema mit beabsichtigter Fehlausrichtung ("Tilt-Locking");
- ein Hänsch-Couillaud-Schema.

4. Optische Vorrichtung nach einem der vorhergehenden Ansprüche, darüber hinaus dazu ausgestaltet, am Eingang einen zweiten kohärenten Lichtstrahl, genannt zweiter Pumpstrahl, mit einer zweiten Wellenlänge (λ₂), welche sich von der ersten Wellenlänge unterscheidet, aufzunehmen; wobei das optisch nicht lineare Medium dazu geeignet ist, mit dem ersten und zweiten Pumpstrahl zu wechselwirken und den Ausgangsstrahl durch Frequenzaddition oder -subtraktion zu erzeugen.

5. Quelle für kohärentes Licht, umfassend:
eine optische Vorrichtung zur Wellenlängenkonversion nach einem der vorhergehenden Ansprüche; und
eine Laserquelle (L1), um den ersten Pumpstrahl zu erzeugen.

6. Quelle für kohärentes Licht, umfassend:
eine optische Vorrichtung zur Wellenlängenkonversion gemäß Anspruch 4;
eine erste Laserquelle (L1), um den ersten Pumpstrahl zu erzeugen; und
eine zweite Laserquelle (L2), um den zweiten Pumpstrahl zu erzeugen.

7. Quelle für kohärentes Licht nach Anspruch 6, wobei der zweite Pumpstrahl eine Leistung aufweist, welche höher ist als diejenige des ersten Pumpstrahls.

8. Quelle für kohärentes Licht nach einem der Ansprüche 6 oder 7, umfassend außerdem ein zweites Regelsystem (BA2), um die Wellenlänge des zweiten Pumpstrahls auf die Resonanzwellenlänge der Kavität zu regeln.

9. Quelle für kohärentes Licht nach Anspruch 8, wobei das zweite Regelsystem dazu ausgestaltet ist, die Wellenlänge des zweiten Pumpstrahls derart zu regeln, dass die optische Leistung des Ausgangsstrahls maximiert wird.

10. Quelle für kohärentes Licht nach einem der Ansprüche 6-9, wobei die zweite Laserquelle zwei Wellenlängenabgleichmechanismen aufweist, einen ersten Mechanismus, welcher als schnell bezeichnet wird, und einen zweiten Mechanismus, welcher als langsam bezeichnet wird und im Vergleich zu dem ersten Mechanismus ein engeres Passband, jedoch eine umfangreichere Dynamik aufweist; und wobei das zweite Regelsystem dazu ausgestaltet ist:
- wenn die Leistung des Ausgangsstrahls unter eine erste Schwelle absinkt, den langsamen Wellenlängenabgleichmechanismus zu blockieren und neu zu initialisieren und nur den schnellen Mechanismus für die Regelung zu nutzen;
- wenn die Leistung des Ausgangsstrahls über eine zweite Schwelle hinausgeht, welche höher ist als die erste Schwelle, die Regelung des langsamen Mechanismus zu reaktivieren.

11. Quelle für kohärentes Licht nach einem der Ansprüche 5-10, umfassend außerdem ein drittes Regelsystem (BA3), um die Wellenlänge des ersten Pumpstrahls auf eine externe Referenz zu regeln.
